# EUROPÄISCHE PATENTSCHRIFT

(11) **EP 1 157 961 B1**
(45) Veröffentlichungstag und Bekanntmachung des Hinweises auf die Patenterteilung: **20.07.2011**
(21) Anmeldenummer: 01112709.9
(22) Anmeldetag: 25.05.2001
(51) Int. Cl.: B66C 13/48, G01S 13/02

(54) **Containeridentifizierungsvorrichtung für in Containerterminals eingesetzte Fahr-und Hebezeuge**
Container identification apparatus for the transporting- and lifting devices of a container terminal
Dispositif d' identification de conteneurs pour les appareils de transport et de levage d' un terminal de conteneurs

(30) Priorität: 25.05.2000 DE 10026075
(43) Veröffentlichungstag der Anmeldung: 28.11.2001
(73) Patentinhaber: SIEMENS AKTIENGESELLSCHAFT, 80333 München (DE)
(72) Erfinder: Bulst, Wolf-Eckhart, 81379 München (DE); Hoogenboom, Ed, 2371 CZ Roelofarendsveen (NL)

(56) Entgegenhaltungen:
- EP-A- 0 618 460
- DE-B- 1 279 785

## Beschreibung

Die Erfindung bezieht sich auf eine Containeridentifizierungsvorrichtung für in Containerterminals eingesetzte Fahr- und Hebezeuge, insbesondere für Kaikrane, Greiferkrane, Overheadkrane, Torlader, Stapelkrane, Straddle Carrier etc., mit einer Abfrageeinrichtung, die einem Fahr- bzw. Hebezeug zugeordnet ist, und einem Etikett od.dgl., das an einem Container angeordnet ist und Informationen enthält, die mittels der Abfrageeinrichtung ent- bzw. aufnehmbar sind.

Derartige Containeridentifizierungsvorrichtungen kommen zunehmend in Containerterminals zum Einsatz, um die dort stattfindenden Be-, Entladungs- und Transportvorgänge besser erfassen zu können, wobei selbstverständlich diese Erfassung auf den jeweiligen Container bezogen erfolgen sollte.

Aus DE 1 279 785 A ist ein System zum selbsttätigen drahtlosen Übertragen von mehrstelligen Informationen zwischen gegeneinander beweglichen Abfrage- und Antwortgeräten bekannt, insbesondere der Nummern von Eisenbahnfahrzeugen nach ortsfesten Abfragegeräten. Jedes Abfragegerät sendet in einem vorgegebenen Frequenzband ein periodisch seine Frequenz veränderndes Abfragesignal. Aus dem Abfragesignal wählt das jeweils vorbeibewegte Antwortgerät die der Information zugeordneten Frequenzen durch Filter aus und sendet für jede Stelle der Information eine vorgegebene Anzahl von Antwortfrequenzen zum Abfragegerät zurück.

Der Erfindung liegt die Aufgabe zugrunde, die Datenerfassung während der genannten Be-, Entladungs- und Transportvorgänge zu verbessern, wobei hierdurch die Durchgangsgeschwindigkeit von Containern durch Containerterminals erhöht werden soll und gleichzeitig gewährleistet werden soll, dass die Anzahl von Fehlern reduziert wird und genaue Informationen an Kunden weitergegeben werden können.

Diese Aufgabe wird erfindungsgemäß dadurch gelöst, dass die Abfrageeinrichtung der Containeridentifizierungsvorrichtung zumindest eine Sende- und Empfangseinheit aufweist, mittels der ein Sendeimpuls zum containerseitigen Etikett abstrahlbar ist, und dass das containerseitige Etikett zumindest teilweise als Oberflächenwellensensor ausgebildet ist, mittels dem der von der Sende- und Empfangseinheit der Abfrageeinrichtung abgestrahlte Sendeimpuls in ein akustisches Oberflächenwellensignal umwandelbar, dieses akustische Oberflächenwellensignal veränderbar, das veränderte akustische Oberflächenwellensignal in einen Rücksendeimpuls umwandelbar und der Rücksendeimpuls zur Sende- und Empfangseinheit der Abfrageeinrichtung zurückstrahlbar ist. Hierdurch wird eine zuverlässige Erfassung von containerbezogenen Daten ermöglicht, da derartige Oberflächenwellensensoren hinsichtlich ihrer Funktionsfähigkeit durch in Containerterminals unter Umständen auftretende umgebungsbedingte Störungen nicht beeinträchtigbar sind. Hierdurch können fehlerhafte Informationsweitergaben weitestgehend bzw. vollständig vermieden werden.

Gemäß einer vorteilhaften Ausführungsform der erfindungsgemäßen Containeridentifizierungsvorrichtung ist die zumindest eine Sende- und Empfangseinheit der Abfrageeinrichtung als Radareinheit ausgebildet, mittels der elektromagnetische Wellensignale abstrahl- und empfangbar sind, die vom containerseitigen Oberflächenwellensensor zu einer dem Identifizierungscode des jeweiligen Containers entsprechenden elektromagnetischen Impulsfolge modifizier- und an die Radareinheit der Abfrageeinrichtung zurückstrahlbar sind. Hierdurch ist es möglich, das beispielsweise zu Identifizierungszwecken zwischen der Abfrageeinrichtung und dem Oberflächenwellensensor gesendete Signal während der Signalübertragung zwischen den beiden Bauteilen als elektromagnetische Welle, die für diese Übertragungszwecke besonders geeignet ist, zu gestalten, wohingegen dasselbe Sendesignal während der Informationserfassung als akustisches Oberflächenwellensignal ausgebildet ist, wobei diese physikalische Form gerade für die Erfassung von Informationen besonders vorteilhaft ist.

Der containerseitige Oberflächenwellensensor kann sowohl als Aktiv- als auch als Passivsensor ausgebildet sein.

Bei Ausgestaltung als Passivsensor ist es zweckmäßig, wenn der containerseitige Oberflächenwellensensor durch Einleitung und Beendigung der Abstrahlung des elektromagnetischen Wellensignals von der Radareinheit der Abfrageeinrichtung ein- bzw. ausschaltbar ist, wobei eine besonders vorteilhafte Ausgestaltung vorliegt, wenn der containerseitige Oberflächenwellensensor so ausgebildet ist, dass in ihm enthaltene Informationen frequenzgetriggert abfragbar sind.

Zweckmäßigerweise enthält die vom containerseitigen Oberflächenwellensensor zur Radareinheit der Abfrageeinrichtung zurückgestrahlte elektromagnetische Impulsfolge einen Identifizierungscode des den Oberflächenwellensensor aufweisenden Containers.

Darüber hinaus ist es möglich, dass die vom containerseitigen Oberflächenwellensensor zur Radareinheit der Abfrageeinrichtung zurückgestrahlte elektromagnetische Impulsfolge Informationen bezüglich des Inhalts bzw. der Ladung des den Oberflächenwellensensor aufweisenden Containers enthält.

Vorteilhaft ist dem Oberflächenwellensensor jedes Containers eine unterscheidbare Signalform zugeordnet.

Bei der Realisierung der erfindungsgemäßen Containeridentifizierungsvorrichtung in einem Containerterminal ist es zweckmäßig, wenn die Abfrageeinrichtung eine Vielzahl von Sende- und Empfangseinheiten aufweist, die an geeigneten Stellen des containerterminalseitigen Fahr- bzw. Hebezeugs, z.B. an geeigneten Stellen der Rahmenkonstruktion, eines Spreaders und/oder einer Laufkatze eines Kaikrans angeordnet sind.

Zu jedem Container können mehrere Etiketten bzw. Oberflächenwellensensoren gehören.

Jeder Oberflächenwellensensor kann eine kombinierte Sende-/Empfangsantenne aufweisen, wobei selbstverständlich auch jede Sende- und Empfangseinheit der Abfrageeinrichtung eine kombinierte Sende-/Empfangsantenne aufweisen kann. Zweckmäßigerweise ist bei der Anordnung der containerseitigen Oberflächenwellensensoren darauf zu achten, dass die Oberflächenwellensensoren entsprechend dem ISO-10374-Standard der American Association of Railroads und/oder dem Europäischen CEN-Standard für Eisenbahnen am Container positioniert werden.

Jeder Oberflächenwellensensor kann einen Interdigitalwandler, mittels dem das von der Radareinheit der Abfrageeinrichtung eintreffende elektromagnetische Wellensignal in ein akustisches Oberflächenwellensignal und das auf ihn reflektierte modifizierte akustische Oberflächenwellensignal in ein zur Radareinheit der Abfrageeinrichtung rückstrahlbares elektromagnetisches Wellensignal umwandelbar ist, und Reflektoren aufweisen, die im Klangpfad des Oberflächenwellensensors angeordnet sind und mittels denen das vom Interdigitalwandler abgegebene akustische Oberflächenwellensignal modifizier- und zum Interdigitalwandler reflektierbar ist.

Jede Radareinheit der Abfrageeinrichtung weist vorteilhaft ein Funkfrequenzmodul auf, mittels dem ein zur Radareinheit reflektiertes hochfrequentes elektromagnetisches Wellensignal verstärk- und auf eine Grundbandfrequenz herunterwandelbar ist.

Gemäß einer weiteren vorteilhaften Ausführungsform der erfindungsgemäßen Containeridentifizierungsvorrichtung weist jede Radareinheit eine digitale Verarbeitungseinheit auf, mittels der die im Funkfrequenzmodul aus dem hochfrequenten elektromagnetischen Wellensignal erzeugte Signalimpulsfolge analysierbar ist.

Die Abfrageeinrichtung kann eine Zentrale, z.B. in Form eines PC, aufweisen, an die bzw. den jede Radareinheit der Abfrageeinrichtung angeschlossen ist.

Bei einem erfindungsgemäßen Verfahren zur Identifizierung von Containern in Containerterminals, bei dem von einer Abfrageeinrichtung aus in einem containerseitigen Etikett enthaltene Informationen aufgenommen werden, wird von der Abfrageeinrichtung ein Sendeimpuls zum containerseitigen Etikett abgestrahlt und dieser Sendeimpuls am containerseitigen Etikett in ein akustisches Oberflächenwellensignal umgewandelt, verändert und wieder in einen Rücksendeimpuls umgewandelt, bevor er zur Abfrageeinrichtung zurückgestrahlt wird.

Als Sendeimpuls der Abfrageeinrichtung und als Rücksendeimpuls des containerseitigen Oberflächenwellensensors wird zweckmäßigerweise jeweils ein elektromagnetisches Wellensignal eingesetzt.

Der containerseitige Oberflächenwellensensor wird gemäß einer vorteilhaften Ausgestaltung des erfindungsgemäßen Verfahrens mittels des von der Abfrageeinrichtung abgestrahlten elektromagnetischen Wellensignals in Betrieb gesetzt.

Vorteilhaft werden die im containerseitigen Oberflächenwellensensor enthaltenen Informationen frequenzgetriggert abgefragt.

Um internationalen Standards zu genügen ist es vorteilhaft, wenn die elektromagnetischen Wellensignale von der Abfrageeinrichtung mit einer Frequenz von 2,45 GHz oder einer Frequenz von 13,65 MHz abgestrahlt werden.

Im folgenden wird die Erfindung an Hand einer Ausführungsform unter Bezugnahme auf die Zeichnung näher erläutert. Es zeigen:
- FIG 1: eine prinzipielle Darstellung einer Ausführungsform ei- ner erfindungsgemäßen Containeridentifizierungsvorrich- tung bzw. eines erfindungsgemäßen Verfahrens zur Iden- tifizierung von Containern;
- FIG 2: eine Darstellung eines Kaikrans eines Containertermi- nals, in dem die erfindungsgemäße Containeridentifizie- rungsvorrichtung gemäß FIG 1 bzw. das entsprechende Verfahren zur Identifizierung von Containern zum Ein- satz kommt;
- FIG 3: einen Abschnitt des Kaikrans, in dem wesentliche Be- standteile der erfindungsgemäßen Containeridentifizie- rungsvorrichtung angeordnet sind;
- FIG 4: einen anderen Abschnitt des in den FIG 2 und 3 gezeig- ten Kaikrans mit weiteren Bestandteilen der erfindungs- gemäßen Containeridentifizierungsvorrichtung; und
- FIG 5: eine Prinzipdarstellung eines Oberflächenwellensensors der erfindungsgemäßen Containeridentifizierungsvorrich- tung.

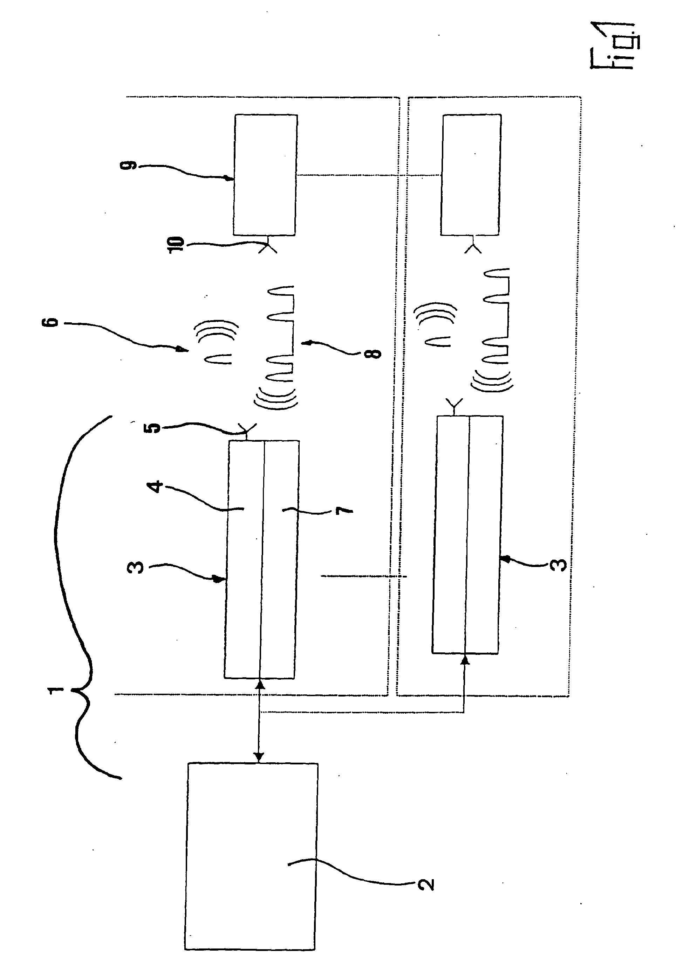

Eine in FIG 1 prinzipiell dargestellte Containeridentifizierungsvorrichtung kommt insbesondere in Containerterminals zum Einsatz, wobei ihre Bestandteile an Fahr- bzw. Hebezeugen vorgesehen sein können, z.B. an einem Kaikran, an einem Greiferkran, an einem Overheadkran, an einem Torlader, an einem Stapelkran, an einem Straddle Carrier etc.

Zu der erfindungsgemäßen Containeridentifizierungsvorrichtung gehört eine Abfrageeinrichtung 1, zu der bei dem in FIG 1 dargestellten Ausführungsbeispiel der erfindungsgemäßen Containeridentifizierungsvorrichtung eine Zentrale 2, bei der es sich beispielsweise um einen Kommunikations- und Steuerzwecken dienenden PC handeln kann, und Sende- und Empfangseinheiten 3 gehören, von denen eine größere Anzahl vorhanden sein kann und die bei der im folgenden beschriebenen Ausführungsform der erfindungsgemäßen Containeridentifizierungsvorrichtung als Radareinheiten 3 ausgebildet sind. Jede Sende- und Empfangseinheit bzw. Radareinheit 3 ist in geeigneter Weise an die Zentrale bzw. den PC 2 angeschlossen.

Zu jeder Radareinheit 3 gehört ein Sende- und Empfangsteil 4 mit einer Sende-/Empfangsantenne 5, mittels der ein Sendeimpuls bzw. ein elektromagnetisches Wellensignal 6 abstrahlbar ist. Des weiteren gehört zur Radareinheit 3 eine digitale Verarbeitungseinheit (DSP) 7, mittels der ein von der Sende-/Empfangsantenne 5 der entsprechenden Radareinheit 3 empfangenes zurückgesendetes elektromagnetisches Wellensignal in Form eines Rücksendeimpulses 8 auswertbar ist.

Des weiteren gehören zu der in FIG 1 prinzipiell dargestellten erfindungsgemäßen Containeridentifizierungsvorrichtung containerseitige Etiketten, die zumindest teilweise als Oberflächenwellensensoren 9 ausgebildet sind. Jeder Oberflächenwellensensor 9 hat eine Sende-/Empfangsantenne 10, die, wie in FIG 1 dargestellt, als kombinierte Sende-/Empfangsantenne 10 ausgebildet sein kann oder auch separate Sende- und Empfangsteile aufweisen kann.

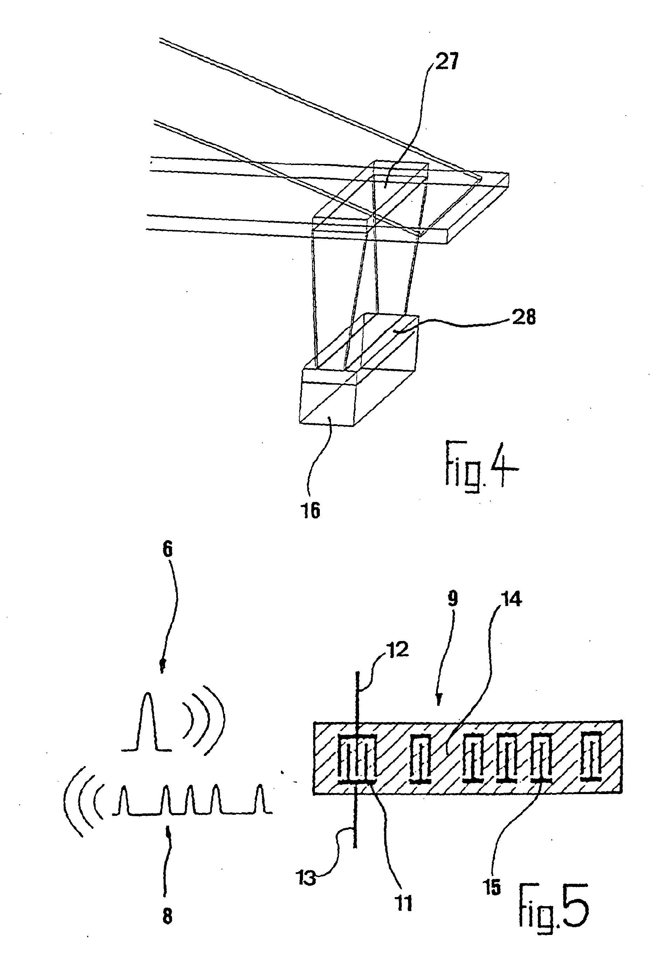

Eine in FIG 5 in Einzelheiten dargestellte Ausführungsform eines derartigen Oberflächenwellensensors 9 hat einen Interdigitalwandler 11, der an ein Sendeteil 12 und ein Empfangsteil 13 der Sende-/Empfangsantenneneinrichtung angeschlossen ist.

Mittels des Interdigitalwandlers 11 des Oberflächenwellensensors 9 ist das von der Radareinheit 3 abgestrahlte elektromagnetische Wellensignal 6 in eine akustische Oberflächenwelle transformierbar. Diese akustische Oberflächenwelle pflanzt sich in einem auf der Oberfläche eines piezoelektrischen Kristalls 14 ausgebildetem Klangweg fort, wobei in dem Klangweg bzw. Klangpfad der akustischen Oberflächenwelle Reflektoren 15 bestimmter Ausbildung und in bestimmter Anordnung vorgesehen sind. Durch diese Reflektoren 15 wird die vom Interdigitalwandler 14 ausgesandte akustische Oberflächenwelle teilweise reflektiert. Die zum Interdigitalwandler 11 durch die Reflektoren 15 reflektierten akustischen Oberflächenwellen werden mittels des Interdigitalwandlers 11 in den Rücksendeimpuls 8 in Form eines elektromagnetischen Wellensignals zurückverwandelt und dann mittels des Sendeteils 12 der Antenneneinrichtung des Oberflächenwellensensors 9 zur Radareinheit 3 zurückgesendet.

Da die Geschwindigkeit einer akustischen Oberflächenwelle ungefähr um den Faktor 100 000 geringer ist als die Geschwindigkeit von Licht- oder Funksignalen, können die elektromagnetischen Wellensignale mittels des vergleichsweise kleinen Oberflächenwellensensors 9 wirksam verzögert werden. Hierbei ergibt sich beispielsweise bei einer Abmessung des Oberflächenwellensensors 9 zwischen 1,5 mm und 2 mm eine Zeitverzögerung von 1 µs, wobei zu beachten ist, dass der Abstand zwischen dem Interdigitalwandler 11 und den Reflektoren 15 des Oberflächenwellensensors 9 doppelt genutzt wird. Hierdurch kann der Rücksendeimpuls 8 des Oberflächenwellensensors 9 in einfacher Weise von Umgebungsechos separiert werden, die üblicherweise in weniger als 1 bis 2 µs verschwinden, wobei zur Schaffung von Zeitverzögerungen im Bereich von einigen µs entsprechende Abmessungen des Oberflächenwellensensors 9 vorgesehen werden.

Das zur Radareinheit 3 reflektierte elektromagnetische Wellensignal in Form des Rücksendeimpulses 8 wird in einem Funkfrequenzmodul der Radareinheit 3 verstärkt und auf eine Grundbandfrequenz heruntergewandelt. Danach werden die entsprechend bearbeiteten Signale des Oberflächenwellensensors 9 mittels der digitalen Verarbeitungseinheit 7 analysiert. Die als Ergebnis dieser Analyse entstehenden Daten können dann zur Zentrale bzw. zum PC 2 weiter übertragen werden, um dort nachbearbeitet und gespeichert zu werden.

Der containerseitige Oberflächenwellensensor 9 kann so gestaltet sein, dass die in ihm enthaltenen Informationen frequenzgetriggert abfragbar sind.

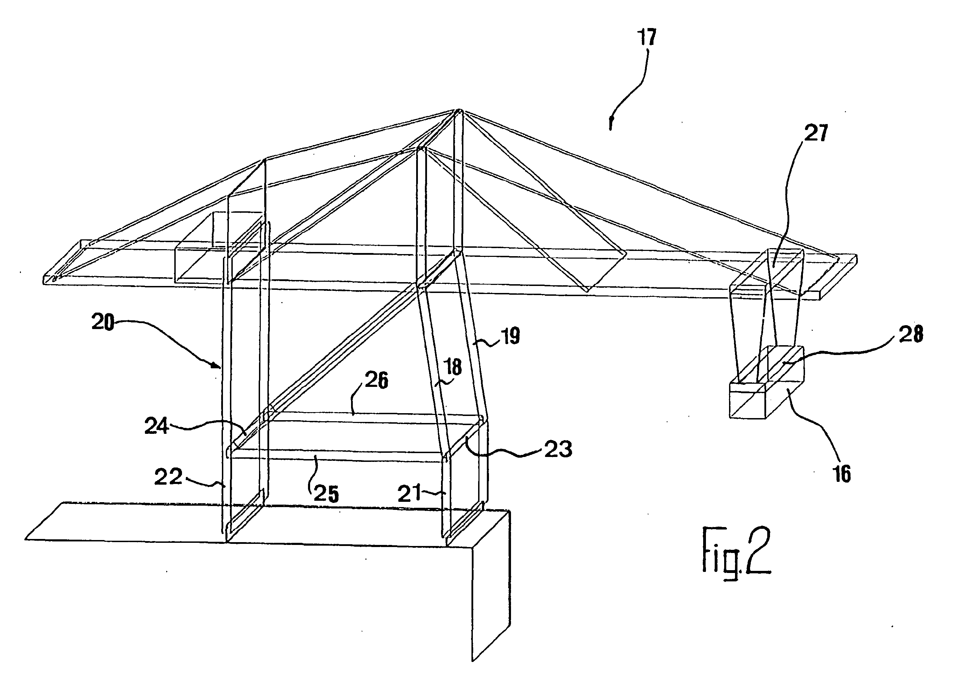

Der containerseitige Oberflächenwellensensor 9 ist entsprechend als Passivsensor, aber auch als Aktivsensor ausbildbar. Jeder containerseitige Oberflächenwellensensor 9 ist durch entsprechende Ausbildung und Anordnung seiner Reflektoren 15 individualisiert, so dass das vom jeweiligen Oberflächenwellensensor 9 zur Radareinheit 3 zurückgesendete elektromagnetische Wellensignal 8 für den jeweiligen Oberflächenwellensensor 9 charakteristisch ist. Aus der zur Radareinheit 3 zurückgestrahlten elektromagnetischen Impulsfolge 8 ist ein Identifizierungscode desjenigen, beispielsweise in den FIG 2 bis 4 dargestellten Containers 16 entnehmbar, der mit dem zurücksendenden Oberflächenwellensensor 9 versehen ist. Des weiteren können die in dem Oberflächenwellensensor 9 enthaltenen Informationen auch Daten bezüglich des Inhalts bzw. der Ladung des mit dem Oberflächenwellensensor 9 versehenen Containers 16 betreffen.

Durch seine Ausgestaltung mit Reflektoren 15, die in individueller Weise angeordnet bzw. ausgebildet sind, weist jeder Oberflächenwellensensor 9 eine unterscheidbare, nur ihm zuzuordnende Signalform auf. Hierzu sind die Reflektoren 15 barcodeartig auf der Oberfläche angeordnet; die Peaks der Antwort-Impulskette korrelieren exakt mit dem Muster der Barcodes.

Bei der in den FIG 1 bis 5 dargestellten Ausführungsform der erfindungsgemäßen Containeridentifizierungsvorrichtung strahlt die Radareinheit 3 der Abfrageeinrichtung 1 elektromagnetische Wellensignale mit einer Frequenz von 2,45 GHz oder einer Frequenz von 13,65 MHz ab.

An Hand der FIG 2 bis 4 ist die Ausgestaltung bzw. die Anordnung der einzelnen Bauteile einer erfindungsgemäßen Ausführungsform der Containeridentifizierungsvorrichtung am Beispiel eines Kaikrans 17 dargestellt.

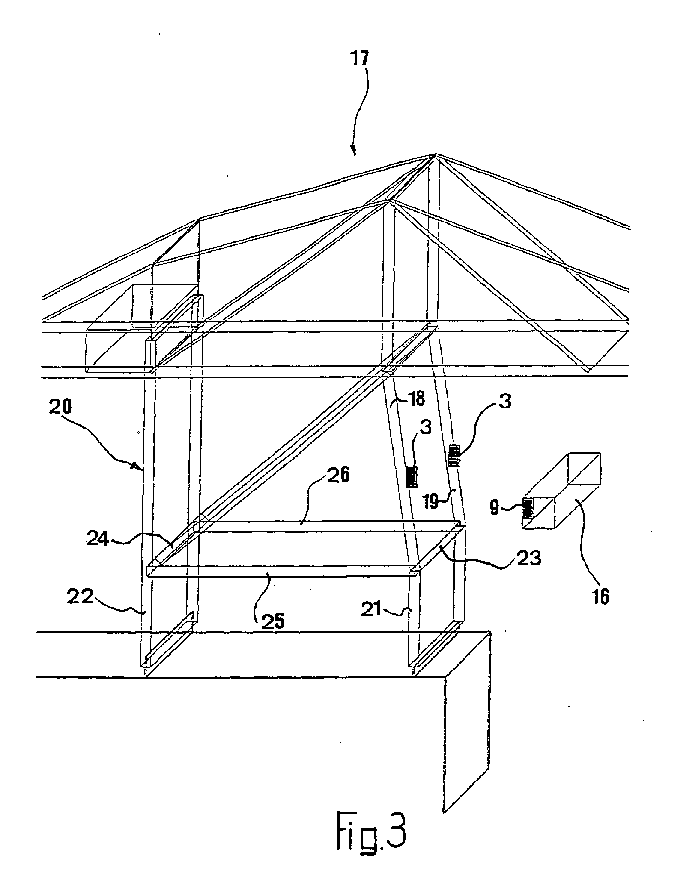

Wie insbesondere aus FIG 3 hervorgeht, sind an einem oder zwei Trägern 18, 19 einer Rahmenkonstruktion 20 des Kaikrans 17 Sende- und Empfangseinheiten bzw. Radareinheiten 3 der Abfrageeinrichtung 1 der erfindungsgemäßen Containeridentifizierungsvorrichtung angeordnet. Die Zentrale bzw. der PC 2 der Abfrageeinrichtung 1 kann an einem beliebigen Ort vorgesehen sein und ist in den FIG 2 bis 4 nicht dargestellt. Die beiden in FIG 3 am Kaikran 17 bzw. an dessen Rahmenkonstruktion 20 dargestellten Sende- und Empfangseinheiten bzw. Radareinheiten 3 sind lediglich beispielhaft. Entsprechend können auch an den Trägern 21, 22, 23, 24, 25 und 26 der Rahmenkonstruktion 20 des Kaikrans 17 Sende- und Empfangseinheiten bzw. Radareinheiten 3 der Abfrageeinrichtung 1 vorgesehen sein.

Des weiteren ist es möglich, an einer in den FIG 2 und 4 dargestellten Laufkatze 27 des Kaikrans 17 und an einem an der Laufkatze 27 angeordneten Spreader 28 Sende- und Empfangseinheiten bzw. Radareinheiten 3 der Abfrageeinrichtung 1 vorzusehen.

Aus FIG 3 geht hervor, dass an dem Container 16 ein Etikett bzw. Oberflächenwellensensor 9 in bestimmter Weise angeordnet ist. Je Container 16 können mehrere Oberflächenwellensensoren 9 vorgesehen sein.

Bei der Anordnung der containerseitigen Etiketten bzw. Oberflächenwellensensoren 9 sollte darauf geachtet werden, dass der ISO-10374-Standard der American Association of Railroads und/oder der Europäische CEN-Standard für Eisenbahnen eingehalten werden.

Wenn der Container 16 während eines Be- oder Entladungszyklus oder auf dem Grund befindlich weit genug von anderen Containern 16 entfernt ist, kann die Sende- und Empfangseinheit bzw. Radareinheit 3 der Abfrageeinrichtung 1 eingeschaltet werden; hierdurch wird der bzw. werden die als Passivsensor ausgestalteten Oberflächenwellensensoren 9 des vereinzelten Containers 16 in Betrieb gesetzt, so dass in dem bzw. in den Oberflächenwellensensoren 9 enthaltene Informationen bezüglich der Codierung oder des Inhalts des vereinzelten Containers 16 entnommen werden können. Falls die Oberflächenwellensensoren 9 als Aktivsensoren ausgebildet sind, können die entsprechenden Informationen ausgelesen werden, wenn sich der betreffende Container 16 in einem entsprechend eingerichteten Bereich befindet.

Die genannten Informationen können aus den Oberflächenwellensensoren 9 entnommen werden, während eines Beladungs- oder Entladungszyklus des Containers 16, während des Schwebezustands des Containers 16 oder wenn der Container 16 sich am Boden befindet, wenn der Container 16 auf einem Chassis abgesetzt wird, wenn der Container 16 mittels eines Chassis transportiert wird oder wenn er durch irgendein anderes Fahrzeug transportiert wird.

## Patentansprüche

1. Containeridentifizierungsvorrichtung für in Containerterminals eingesetzte Fahr- und Hebezeuge, insbesondere für Kaikrane (17), Greiferkrane, Overheadkrane, Torlader, Stapelkrane, Straddle Carrier etc., mit einer Abfrageeinrichtung (1), die einem Fahr- bzw. Hebezeug (17) zugeordnet ist, und einem Etikett (9), das an einem Container (16) angeordnet ist und Informationen enthält, die mittels der Abfrageeinrichtung (1) ent- bzw. aufnehmbar sind, **dadurch**
**gekennzeichnet , dass** die Abfrageeinrichtung (1) zumindest eine Sende- und Empfangseinheit (3) aufweist, mittels der ein Sendeimpuls (6) zum containerseitigen Etikett (9) abstrahlbar ist, und dass das containerseitige Etikett (9) zumindest teilweise als Oberflächenwellensensor (9) ausgebildet ist, mittels dem der von der Sende- und Empfangseinheit (3) der Abfrageeinrichtung (1) abgestrahlte Sendeimpuls (6) in ein akustisches Oberflächenwellensignal umwandelbar, dieses akustische Oberflächenwellensignal veränderbar, das veränderte akustische Oberflächenwellensignal in einen Rücksendeimpuls (8) umwandelbar und der Rücksendeimpuls (8) zur Sende- und Empfangseinheit (3) der Abfrageeinrichtung (1) zurückstrahlbar ist.

2. Containeridentifizierungsvorrichtung nach Anspruch 1, bei der die zumindest eine Sende- und Empfangseinheit (3) der Abfrageeinrichtung (1) als Radareinheit (3) ausgebildet ist, mittels der elektromagnetische Wellensignale (6) abstrahl- und empfangbar sind, die vom containerseitigen Oberflächenwellensensor (9) zu einer dem Identifizierungscode des jeweiligen Containers (16) entsprechenden elektromagnetischen Impulsfolge (8) modifizier- und an die Radareinheit (3) der Abfrageeinrichtung (1) zurückstrahlbar sind.

3. Containeridentifizierungsvorrichtung nach Anspruch 1 oder 2, bei der der containerseitige Oberflächenwellensensor (9) als Aktivsensor ausgebildet ist.

4. Containeridentifizierungsvorrichtung nach Anspruch 1 oder 2, bei der der containerseitige Oberflächenwellensensor (9) als Passivsensor ausgebildet ist.

5. Containeridentifizierungsvorrichtung nach Anspruch 3 oder 4, bei der der containerseitige Oberflächenwellensensor (9) durch Einleitung und Beendigung der Abstrahlung eines elektromagnetischen Wellensignals (6) von der Radareinheit (3) der Abfrageeinrichtung (1) ein- bzw. ausschaltbar ist.

6. Containeridentifizierungsvorrichtung nach einem der Ansprüche 3 bis 5, bei der der containerseitige Oberflächenwellensensor (9) so ausgebildet ist, dass in ihm enthaltene Informationen frequenzgetriggert abfragbar sind.

7. Containeridentifizierungsvorrichtung nach einem der Ansprüche 2 bis 6, bei der die vom containerseitigen Oberflächenwellensensor (9) zur Radareinheit (3) der Abfrageeinrichtung (1) zurückgestrahlte elektromagnetische Impulsfolge (8) einen Identifizierungscode des den Oberflächenwellensensor (9) aufweisenden Containers (16) enthält.

8. Containeridentifizierungsvorrichtung nach einem der Ansprüche 2 bis 7, bei der die vom containerseitigen Oberflächenwellensensor (9) zur Radareinheit (3) der Abfrageeinrichtung (1) zurückgestrahlte elektromagnetische Impulsfolge (8) Informationen bezüglich des Inhalts bzw. der Ladung des den Oberflächenwellensensor (9) aufweisenden Containers (16) enthält.

9. Containeridentifizierungsvorrichtung nach einem der Ansprüche 1 bis 8, bei der dem Oberflächenwellensensor (9) jedes Containers (16) eine unterscheidbare Signalform zugeordnet ist.

10. Containeridentifizierungsvorrichtung nach einem der Ansprüche 1 bis 9, bei der die Abfrageeinrichtung (1) eine Vielzahl von Sende- und Empfangseinheiten (3) aufweist, die an geeigneten Stellen des containerterminalseitigen Fahr- bzw. Hebezeugs, z.B. an geeigneten Stellen (18,19,21,22,23, 24,25,26) der Rahmenkonstruktion (20), eines Spreaders (28) und/oder einer Laufkatze (27) eines Kaikrans (17), angeordnet sind.

11. Containeridentifizierungsvorrichtung nach einem der Ansprüche 1 bis 10, bei der mehrere Etiketten bzw. Oberflächenwellensensoren (9) an einem Container (16) vorgesehen sind.

12. Containeridentifizierungsvorrichtung nach einem der Ansprüche 1 bis 11, bei der jeder Oberflächenwellensensor (9) eine kombinierte Sende-/Empfangsantenne (10) aufweist.

13. Containeridentifizierungsvorrichtung nach einem der Ansprüche 1 bis 12, bei der jede Sende- und Empfangseinheit (3) der Abfrageeinrichtung (1) eine kombinierte Sende-/Empfangsantenne (5) aufweist.

14. Containeridentifizierungsvorrichtung nach einem der Ansprüche 1 bis 13, bei der jeder containerseitige Oberflächenwellensensor (9) entsprechend dem ISO-10374-Standard der American Association of Railroads und/oder dem Europäischen CEN-Standard für Eisenbahnen am Container (16) positioniert ist.

15. Containeridentifizierungsvorrichtung nach einem der Ansprüche 2 bis 14, bei der jeder Oberflächenwellensensor (9) einen Interdigitalwandler (11), mittels dem das von der Radareinheit (3) der Abfrageeinrichtung (1) eintreffende elektromagnetische Wellensignal (6) in ein akustisches Oberflächenwellensignal und das auf ihn reflektierte modifizierte akustische Oberflächensignal in ein zur Radareinheit (3) der Abfrageeinrichtung (1) rückstrahlbares elektromagnetisches Wellensignal (8) umwandelbar ist, und Reflektoren (15) aufweist, die im Klangpfad des Oberflächenwellensensors (9) angeordnet sind und mittels denen das vom Interdigitalwandler (11) abgegebene akustische Oberflächenwellensignal modifizier- und zum Interdigitalwandler (11) reflektierbar ist.

16. Containeridentifizierungsvorrichtung nach einem der Ansprüche 2 bis 15, bei der jede Radareinheit (3) der Abfrageeinrichtung (1) ein Funkfrequenzmodul aufweist, mittels dem ein zur Radareinheit (3) reflektiertes hochfrequentes elektromagnetisches Wellensignal (8) verstärk- und auf eine Grundbandfrequenz herunterwandelbar ist.

17. Containeridentifizierungsvorrichtung nach einem der Ansprüche 2 bis 16, bei der jede Radareinheit (3) eine digitale Verarbeitungseinheit (7) aufweist, mittels der die im Funkfrequenzmodul aus dem hochfrequenten elektromagnetischen Wellensignal (8) erzeugte Signalimpulsfolge analysierbar ist.

18. Containeridentifizierungsvorrichtung nach einem der Ansprüche 2 bis 17, bei der die Abfrageeinrichtung (1) eine Zentrale (2), z.B. einen PC, aufweist, an die bzw. den jede Radareinheit (3) der Abfrageeinrichtung (1) angeschlossen ist.

19. Verfahren zur Identifizierung von Containern (16) in Containerterminals, bei dem von einer Abfrageeinrichtung (1) aus in einem containerseitigen Etikett (9) enthaltene Informationen aufgenommen werden, **dadurch gekennzeichnet, dass** von der Abfrageeinrichtung (1) ein Sendeimpuls (6) zum containerseitigen Etikett (9) abgestrahlt wird und dass dieser Sendeimpuls (6) am containerseitigen Etikett (9) in ein akustisches Oberflächenwellensignal umgewandelt, verändert und wieder in einen Rücksendeimpuls (8) umgewandelt wird, bevor er zur Abfrageeinrichtung (1) zurückgestrahlt wird.

20. Verfahren nach Anspruch 19, bei dem als Sendeimpuls (6) der Abfrageeinrichtung (1) und als Rücksendeimpuls (8) des containerseitigen Oberflächenwellensensors (9) jeweils ein elektromagnetisches Wellensignal (6, 8) eingesetzt wird.

21. Verfahren nach Anspruch 19, bei dem der containerseitige Oberflächenwellensensor (9) mittels des von der Abfrageeinrichtung (1) abgestrahlten elektromagnetischen Wellensignals (6) in Betrieb gesetzt wird.

22. Verfahren nach einem der Ansprüche 19 bis 21, bei dem im containerseitigen Oberflächenwellensensor enthaltene Informationen frequenzgetriggert abgefragt werden.

23. Verfahren nach einem der Ansprüche 19 bis 22, bei dem die elektromagnetischen Wellensignale (6) von der Abfrageeinrichtung (1) mit einer Frequenz von 2,45 GHz abgestrahlt werden.

24. Verfahren nach einem der Ansprüche 19 bis 23, bei dem die elektromagnetischen Wellensignale (6) von der Abfrageeinrichtung (1) mit einer Frequenz von 13,65 MHz abgestrahlt werden.

## Claims

1. Container identification apparatus for vehicles and lifting devices used in container terminals, in particular for quay cranes (17), grab cranes, overhead cranes, portal cranes, stacker cranes, straddle carriers, etc., comprising an interrogation device (1), which is assigned to a vehicle or lifting device (17), and a tag (9), which is disposed on a container (16) and contains information which is retrievable or recordable, as the case may be, by means of the interrogation device (1), **characterized in that** the interrogation device (1) has at least one transmitter and receiver unit (3), by means of which a transmit pulse (6) can be emitted to the tag (9) on the container side, and that the tag (9) on the container side is configured at least in part as surface wave sensor (9), by means of which the transmit pulse (6) emitted from the transmitter and receiver unit (3) of the interrogation device (1) can be converted into an acoustic surface wave signal, this acoustic surface wave signal can be modified, the modified acoustic surface wave signal can be converted into a return pulse (8) and the return pulse (8) can be emitted back to the transmitter and receiver unit (3) of the interrogation device (1).

2. Container identification apparatus according to Claim 1, wherein the at least one transmitter and receiver unit (3) of the interrogation device (1) is configured as radar unit (3), by means of which electromagnetic wave signals (6) can be emitted and received, which can be modified by the surface wave sensor (9) on the container side to a sequence (8) of electromagnetic pulses corresponding to the identification code of the individual container (16) and emitted back to the radar unit (3) of the interrogation device (1).

3. Container identification apparatus according to Claim 1 or 2, wherein the surface wave sensor (9) on the container side is configured as active sensor.

4. Container identification apparatus according to Claim 1 or 2, wherein the surface wave sensor (9) on the container side is configured as passive sensor.

5. Container identification apparatus according to Claim 3 or 4, wherein the surface wave sensor (9) on the container side can be switched on and off by respectively initiating and ending the emission of an electromagnetic wave signal (6) from the radar unit (3) of the interrogation device (1) .

6. Container identification apparatus according to one of Claims 3 to 5, wherein the surface wave sensor (9) on the container side is configured in such a way that information contained therein is retrievable in frequency triggered form.

7. Container identification apparatus according to one of Claims 2 to 6, wherein the sequence (8) of electromagnetic pulses emitted back from the surface wave sensor (9) on the container side to the radar unit (3) of the interrogation device (1) contains an identification code of the container (16) comprising the surface wave sensor (9).

8. Container identification apparatus according to one of Claims 2 to 7, wherein the sequence (8) of electromagnetic pulses emitted back from the surface wave sensor (9) on the container side to the radar unit (3) of the interrogation device (1) contains information regarding the content or the load of the container (16) comprising the surface wave sensor (9).

9. Container identification apparatus according to one of Claims 1 to 8, wherein the surface wave sensor (9) of each container (16) has a distinguishable signal form assigned thereto.

10. Container identification apparatus according to one of Claims 1 to 9, wherein the interrogation device (1) has a multiplicity of transmitter and receiver units (3), which are disposed at suitable positions of the vehicles or lifting devices on the container terminal side, e.g. at suitable positions (18, 19, 21, 22, 23, 24, 25, 26) of the frame structure (20), of a spreader (28) and/or of a crab (27) on a quay crane (17).

11. Container identification apparatus according to one of Claims 1 to 10, wherein a plurality of tags and surface wave sensors (9) are respectively provided on a container (16).

12. Container identification apparatus according to one of Claims 1 to 11, wherein each surface wave sensor (9) has a combined transmitter/receiver aerial (10).

13. Container identification apparatus according to one of Claims 1 to 12, wherein each transmitter and receiver unit (3) of the interrogation device (1) has a combined transmitter/receiver aerial (5).

14. Container identification apparatus according to one of Claims 1 to 13, wherein each surface wave sensor (9) on the container side is positioned on the container (16) in accordance with the ISO 10374 Standard of the American Association of Railroads and/or the European CEN Standard for Railways.

15. Container identification apparatus according to one of Claims 2 to 14, wherein each surface wave sensor (9) comprises an interdigital converter (11), by means of which the electromagnetic wave signal (6) arriving from the radar unit (3) of the interrogation device (1) can be converted into an acoustic surface wave signal and the modified acoustic surface wave signal reflected thereon can be converted into an electromagnetic wave signal (8) which can be emitted back to the radar unit (3) of the interrogation device (1), and reflectors (15) which are arranged in the sound path of the surface wave sensor (9) and by means of which the acoustic surface wave signal supplied by the interdigital converter (11) can be modified and reflected to the interdigital converter (11).

16. Container identification apparatus according to one of Claims 2 to 15, wherein each radar unit (3) of the interrogation device (1) comprises a radio frequency module, by means of which a high frequency electromagnetic wave signal (8) reflected to the radar unit (3) can be amplified and converted down to a base band frequency.

17. Container identification apparatus according to one of Claims 2 to 16, wherein each radar unit (3) comprises a digital processing unit (7), by means of which the sequence of signal pulses generated in the radio frequency module from the high frequency electromagnetic wave signal (8) can be analyzed.

18. Container identification apparatus according to one of Claims 2 to 17, wherein the interrogation device (1) comprises a central unit (2), e.g. a PC, to which each radar unit (3) of the interrogation device (1) is connected.

19. Method for identifying containers (16) in container terminals, in which information contained in a tag (9) on the container side is acquired by an interrogation device (1), **characterized in that** a transmit pulse (6) is emitted from the interrogation device (1) to the tag (9) on the container side and that this transmit pulse (6) is converted at the tag (9) on the container side into an acoustic surface wave signal, modified and converted again into a return pulse (8), before it is emitted back to the interrogation device (1).

20. Method according to Claim 19, wherein as transmit pulse (6) of the interrogation device (1) and as return pulse (8) of the surface wave sensor (9) on the container side, an electromagnetic wave signal (6, 8) is suitably used in each case.

21. Method according to Claim 19, wherein the surface wave sensor (9) on the container side is put into operation by means of the electromagnetic wave signal (6) emitted from the interrogation device (1).

22. Method according to one of Claims 19 to 21, wherein the information contained in the surface wave sensor on the container side is retrieved in frequency triggered form.

23. Method according to one of Claims 19 to 22, wherein the electromagnetic wave signals (6) are emitted from the interrogation device (1) at a frequency of 2.45 GHz.

24. Method according to one of Claims 19 to 23, wherein the electromagnetic wave signals (6) are emitted from the interrogation device (1) at a frequency of 13.65 GHz.

## Revendications

1. Dispositif d'identification de conteneurs pour des engins de transport et de levage utilisés dans des terminaux de conteneurs, notamment pour des grues ( 17 ) de quai, des grues à grappin, des ponts roulants, des chargeuses à portique, des grues gerbeuses, des transporteurs etc., comprenant un dispositif ( 1 ) d'interrogation, qui est affecté à un engin ( 17 ) de transport ou de levage, et une étiquette ( 19 ) qui est mise sur le conteneur ( 16 ) et qui contient des informations qui peuvent être prélevées ou reçues au moyen du dispositif ( 1 ) d'interrogation, **caractérisé en ce que** le dispositif ( 1 ) d'interrogation comporte au moins une unité ( 3 ) d'émission et de réception, au moyen de laquelle une impulsion ( 6 ) d'émission peut être émise vers l'étiquette du côté du conteneur et **en ce que** l'étiquette ( 9 ) du côté du conteneur est constituée au moins en partie sous la forme d'un capteur ( 9 ) d'ondes de surface au moyen duquel l'impulsion ( 6 ) d'émission émise par l'unité ( 3 ) d'émission et de réception du dispositif ( 1 ) d'interrogation est transformée en un signal d'ondes de surface acoustique, ce signal d'ondes de surface acoustique peut être modifié, le signal d'ondes de surface acoustique modifié peut être transformé en une impulsion ( 8 ) d'émission en retour et l'impulsion ( 8 ) d'émission en retour peut être retournée à l'unité ( 3 ) d'émission et de réception du dispositif ( 1 ) d'interrogation.

2. Dispositif d'identification de conteneurs suivant la revendication 1, dans lequel la au moins unité ( 3 ) d'émission et de réception du dispositif ( 1 ) d'interrogation est constituée sous la forme d'une unité ( 3 ) radar au moyen de laquelle des signaux ( 6 ) d'ondes électromagnétiques peuvent être émis et reçus, signaux qui peuvent être modifiés par le capteur ( 9 ) d'ondes de surface du côté du conteneur en un train ( 8 ) d'impulsions électromagnétiques correspondant au code d'identification du conteneur ( 16 ) respectif et être émis en retour à l'unité ( 3 ) radar du dispositif ( 1 ) d'interrogation.

3. Dispositif d'identification de conteneurs suivant la revendication 1 ou 2, dans lequel le capteur ( 9 ) d'ondes de surface du côté du conteneur est constitué sous la forme d'un capteur actif.

4. Dispositif d'identification de conteneurs suivant la revendication 1, dans lequel le capteur ( 9 ) d'ondes de surface du côté du conteneur est constitué sous la forme d'un capteur passif.

5. Dispositif d'identification de conteneurs suivant la revendication 3 ou 4, dans lequel le capteur ( 9 ) d'ondes de surface du côté du conteneur peut être mis en circuit et hors circuit par application et arrêt de l'émission d'un signal ( 6 ) d'ondes électromagnétiques par l'unité ( 3 ) radar du dispositif ( 1 ) d'interrogation.

6. Dispositif d'identification de conteneurs suivant l'une des revendications 3 à 5, dans lequel le capteur ( 9 ) d'ondes de surface du côté du conteneur est tel que des informations qui y sont contenues peuvent être demandées à déclenchement par la fréquence.

7. Dispositif d'identification de conteneurs suivant l'une des revendications 2 à 6, **caractérisé en ce que** le train ( 8 ) d'impulsions électromagnétiques émis en retour du capteur ( 9 ) d'ondes de surface du côté du conteneur à l'unité ( 3 ) radar de dispositif ( 1 ) d'interrogation contient un code d'identification du conteneur ( 16 ) ayant le capteur ( 9 ) d'ondes de surface.

8. Dispositif d'identification de conteneurs suivant l'une des revendications 2 à 7, dans lequel le train ( 8 ) d'impulsions électromagnétiques émis en retour du capteur ( 9 ) d'ondes de surface du côté du conteneur à l'unité ( 3 ) radar de dispositif ( 1 ) d'interrogation contient des informations se rapportant au contenu ou à la charge du conteneur ( 16 ) comportant le capteur d'ondes de surface.

9. Dispositif d'identification de conteneurs suivant l'une des revendications 1 à 8, dans lequel il est attribué une forme de signal pouvant être distinguée au capteur ( 9 ) d'ondes de surface de chaque conteneur ( 16 ).

10. Dispositif d'identification de conteneurs suivant l'une des revendications 1 à 9, dans lequel le dispositif ( 1 ) d'interrogation comporte une pluralité d'unités ( 3 ) d'émission et de réception, qui sont placées en des points appropriés de l'engin de transport ou de levage du côté du terminal de conteneurs, par exemple, en des points ( 18, 19, 20, 21, 22, 23, 24, 25, 26 ) appropriés de la construction ( 20 ) du bâti, d'un cadre ( 28 ) de levage et/ou d'un chariot ( 27 ) d'une grue ( 17 ) de quai.

11. Dispositif d'identification de conteneurs suivant l'une des revendications 1 à 10, dans lequel il est prévu plusieurs étiquettes ou capteurs ( 9 ) d'ondes de surface un conteneur ( 16 ).

12. Dispositif d'identification de conteneurs suivant l'une des revendications 1 à 11, dans lequel chaque capteur ( 9 ) d'ondes de surface comporte une antenne ( 10) combinée d'émission/réception.

13. Dispositif d'identification de conteneurs suivant l'une des revendications 1 à 12, dans lequel chaque unité ( 13 ) d'émission et de réception du dispositif ( 1 ) d'interrogation comportent une antenne ( 5 ) combinée d'émission/réception.

14. Dispositif d'identification de conteneurs suivant l'une des revendications 1 à 13, dans lequel chaque capteur ( 9 ) d'ondes de surface du côté du conteneur est mis en position sur le conteneur ( 16 ) conformément à la norme ISO-10374 de l'American Association of Railroads et/ou la norme européenne CEN pour les chemins de fer.

15. Dispositif d'identification de conteneurs suivant l'une des revendications 2 à 14, dans lequel chaque capteur ( 9) d'ondes de surface comporte un convertisseur ( 11 ) interdigité au moyen duquel le signal ( 6 ) d'ondes électromagnétiques venant de l'unité ( 3 ) radar du dispositif ( 1 ) d'interrogation peut être transformé en un signal d'ondes de surface acoustique et le signal de surface acoustique modifié et réfléchi sur lui peut être transformé en un signal ( 8 ) d'ondes électromagnétiques émis en retour vers l'unité ( 3) radar du dispositif ( 1 ) d'interrogation, et des réflecteurs qui sont placés dans le trajet du son du capteur ( 9 ) d'onde de surface et au moyen desquels le signal d'ondes de surface acoustique donné par le convertisseur interdigité peut être modifié et réfléchi vers le convertisseur ( 11 ) interdigité.

16. Dispositif d'identification de conteneurs suivant l'une des revendications 2 à 15, dans lequel chaque unité ( 3 ) radar du dispositif ( 1 ) d'interrogation comporte un module de fréquence radio, au moyen duquel un signal ( 8 ) d'ondes électromagnétiques de haute fréquence réfléchi vers l'unité ( 3 ) radar peut être amplifié et transformé vers le bas sur une fréquence de bande fondamentale.

17. Dispositif d'identification de conteneurs suivant l'une des revendications 2 à 16, dans lequel chaque unité ( 3 ) radar comporte une unité ( 7 ) de traitement numérique, au moyen de laquelle le train d'impulsions de signal produit dans le module de fréquence radio à partir du signal électromagnétique de haute fréquence peut être analysé.

18. Dispositif d'identification de conteneurs suivant l'une des revendications 2 à 17, dans lequel le dispositif ( 1 ) d'interrogation comporte une centrale ( 2 ) par exemple un PC, à laquelle chaque unité ( 3 ) radar du dispositif ( 1 ) d'interrogation est raccordée.

19. Procédé d'identification de conteneurs ( 16 ) dans un terminal de conteneurs, dans lequel on enregistre par un dispositif ( 1 ) d'interrogation des informations contenues dans une étiquette ( 9 ) du côté du conteneur, **caractérisé en ce qu'**on émet par le dispositif ( 1 ) d'interrogation une impulsion ( 6 ) d'émission en direction de l'étiquette ( 6 ) du côté du conteneur et **en ce qu'**on transforme cette impulsion ( 6 ) d'émission sur l'étiquette ( 9 ) du côté du conteneur en un signal d'ondes de surface acoustique, on le modifie et on le transforme en une impulsion ( 8 ) d'émission en retour avant de la renvoyer au dispositif ( 1 ) d'interrogation.

20. Procédé suivant la revendication 19, dans lequel on utilise comme impulsion ( 6 ) d'émission du dispositif ( 1 ) d'interrogation et comme impulsion ( 8 ) d'émission en retour du capteur ( 9 ) d'ondes de surface du côté du conteneur respectivement un signal ( 6, 8 ) d'ondes électromagnétiques.

21. Procédé suivant la revendication 19, dans lequel le capteur ( 9 ) d'ondes de surface du côté du conteneur est mis en fonctionnement au moyen du signal ( 6 ) d'ondes électromagnétiques émis par le dispositif ( 1 ) d'interrogation.

22. Procédé suivant la revendication 19 à 21, dans lequel des informations contenues dans le capteur d'ondes de surface du côté du conteneur sont demandées à déclenchement par la fréquence.

23. Procédé suivant la revendication 19 à 22, dans lequel les signaux ( 6 ) d'ondes électromagnétiques sont émis par le dispositif ( 1 ) d'interrogation à une fréquence de 2,45 GHz.

24. Procédé suivant la revendication 19 à 23, dans lequel les signaux ( 6 ) d'ondes électromagnétiques sont émis par le dispositif ( 1 ) d'interrogation à une fréquence de 13,65 MHz.
